# EUROPEAN PATENT APPLICATION

(11) **EP 4 528 567 A1**
(43) Date of publication of application: **26.03.2025**
(21) Application number: 23807677.2
(22) Date of filing: 17.05.2023
(51) Int. Cl.: G06F 21/62

(54) **INFORMATION DISTRIBUTION CONTROL DEVICE, INFORMATION DISTRIBUTION CONTROL METHOD, PROGRAM, AND COMPUTER-READABLE STORAGE MEDIUM**

(30) Priority: 19.05.2022 JP 2022082221
(71) Applicant: NTT Communications Corporation, Tokyo 100-8019 (JP)
(72) Inventor: SAKAINO, Akira, Tokyo 100-8019 (JP)
(74) Representative: Nederlandsch Octrooibureau
(86) International application number: PCT/JP2023/018470
(87) International publication number: WO 2023/224076

(57) **Abstract**

Safe and appropriate information distribution is enabled in compliance with national rules even when target information is distributed across a plurality of countries. When an information provider and an information user distribute target information across countries, an information distribution control apparatus according to an aspect of the invention manages first attribute information including an attribute of the information provider and an attribute of the target information, in which a unique condition of a belonging country is reflected, and condition information indicating a provision condition of the target information. Responding to a data provision request from the information user, the information distribution control apparatus collates second attribute information including an attribute of the information user and an attribute of the target information desired to be used, in which the unique condition of the belonging country is reflected, with the first attribute information and the condition information, and determines whether or not to permit distribution of the target information.

## Description

### FIELD

Embodiments described herein relate generally to an information distribution control apparatus, an information distribution control method, a program, and a computer-readable storage medium used for distributing information such as data and software between companies or industries.

### BACKGROUND

In recent years, for example, in realizing a decarbonization society, the importance of so-called traceability, which enables tracing of all processes from production to consumption and disposal of products and components, has been pointed out. In order to realize the traceability of products and components, it is essential to utilize data that is managed in each process. Therefore, for example, a system has been proposed in which unique data possessed by companies is mutually distributed via a network among a plurality of companies or industries constituting a supply chain. If this system is used, it becomes possible to efficiently collect data of each process stored in companies in a distributed manner and to realize traceability for products and components.

On the other hand, for example, as in the case of a secondary battery or a vehicle equipped with the secondary battery, processes often extend over a plurality of countries (including countries and regions) depending on products or components. In such a case, it is necessary to solve various problems in order to distribute data in each process among countries.

For example, if networks constructed by respective countries are unconditionally connected, security against unauthorized intrusion into the networks and safety of data distribution cannot be guaranteed. Thus, for example, Non-Patent Document 1 proposes a technique that enables security against unauthorized intrusion into networks and safe data distribution by connecting networks by a connector having a function of prohibiting unauthorized intrusion between the networks and executing an authentication procedure in the connector.

### CITATION LIST

### NON PATENT LITERATURE

Non-Patent Document 1: "Prototype of platform for realizing mutual connection with core technology "IDS connector" of Europe "GAIA-X", NTT Communications, Inc., Apr. 8, 2021, Internet <URL: https://www.ntt.com/about-us/press-releases/news/article/2021/0408.html>

### SUMMARY

### TECHNICAL PROBLEM

However, rules, such as laws and regulations and treaties, for preventing the leakage of national secrets and for protecting data sovereignty are different among countries. Thus, in order to appropriately distribute data, a data distribution control technique based on distribution conditions reflecting the above-described rules is required in addition to an inter-network connection technique using connectors described in the above-described Non-Patent Document 1. However, under the present circumstances, as regards such a data distribution control technique, no effective technique has been established.

The present invention has been made in view of the above circumstances, and an object of the present invention is to provide a technique for enabling safe and appropriate information distribution in compliance with national rules even when target information is distributed across a plurality of countries.

### SOLUTION TO PROBLEM

In order to solve the above problem, in an aspect of an information distribution control apparatus or an information distribution control method according to the present invention, when an information provider and an information user distribute target information via an international network between a first information communication network constructed by a first country and a second information communication network constructed by a second country, first attribute information including an attribute of the information provider and an attribute of the target information, in which a unique condition of a belonging country is reflected, and condition information indicating a provision condition of the target information, are managed. Then, responding to a data provision request from the information user, second attribute information including an attribute of the information user and an attribute of the target information desired to be used, in which the unique condition of the belonging country is reflected, is collated with the first attribute information and the condition information, and whether or not to permit distribution of the target information is determined. If the distribution of the target information is permitted by this determination, transfer of the target information from the information provider to the information user is enabled.

According to an aspect of the invention, when information is distributed between a first country and a second country, first attribute information, in which a unique condition of a country to which an information provider belongs is reflected, is collated with second attribute information, in which a unique condition of a country to which an information user belongs is reflected. If a result of the collation satisfies a condition defined in a provision condition, distribution of the information from the information provider to the information user is enabled. Therefore, safe and appropriate information distribution is enabled in compliance with rules, such as laws and regulations and treaties, between the first country and the second country.

### ADVANTAGEOUS EFFECTS OF INVENTION

Specifically, according to an aspect of the present invention, it is possible to provide a technique that enables safe and appropriate information distribution in compliance with national rules even when target information is distributed across a plurality of countries.

### BRIEF DESCRIPTION OF DRAWINGS

FIG. 1 is a block diagram illustrating an example of a configuration of an information distribution system according to an embodiment of the invention.
FIG. 2 is a block diagram illustrating an example of a hardware configuration of an authentication control apparatus included in an information communication network of each country in the information distribution system illustrated in FIG. 1.
FIG. 3 is a block diagram illustrating an example of a software configuration of the authentication control apparatus included in the information communication network of each country in the information distribution system illustrated in FIG. 1.
FIG. 4 is a block diagram illustrating an example of a hardware configuration of an international connection gateway included in an international network in the information distribution system illustrated in FIG. 1.
FIG. 5 is a block diagram illustrating an example of a software configuration of the international connection gateway included in the international network in the information distribution system illustrated in FIG. 1.
FIG. 6 is a diagram illustrating an example of a configuration of a data storage space included in an industry platform of each country in the information distribution system illustrated in FIG. 1.
FIG. 7 is a flowchart illustrating an example of a processing procedure and processing contents executed by a control unit of the authentication control apparatus illustrated in FIG. 3.
FIG. 8 is a flowchart illustrating an example of a processing procedure and processing contents executed by a control unit of the international connection gateway illustrated in FIG. 5.
FIG. 9 is a diagram illustrating an example of attribute information of shared data.
FIG. 10 is a diagram illustrating an example of a provision condition of shared data.
FIG. 11 is a diagram illustrating an example of a determination condition used when determining whether or not to permit provision of shared data.
FIG. 12 is a diagram illustrating an example of a search result relating to shared data, a condition for determining whether or not to permit provision of each data described in the search result, and a result of the determination.

### DETAILED DESCRIPTION

Hereinafter, embodiments according to the present invention are described with reference to the drawings.

### [One Embodiment]

### (Configuration Example)

### (1) System

An inter-country information distribution system according to one embodiment of the present invention enables distribution of target information such as data and software from an information provider to an information user among a plurality of countries, by mutually connecting domestic information communication systems constructed by countries via an international network.

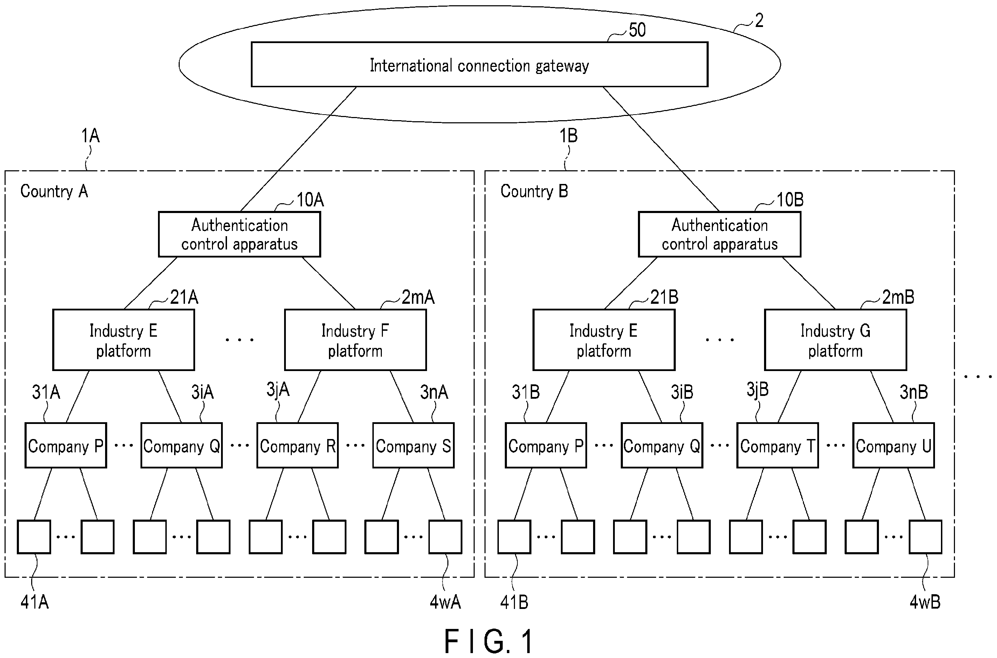

FIG. 1 is a block diagram illustrating an example of a configuration of an inter-country information distribution system according to an embodiment of the present invention. In this example, a case is illustrated in which a domestic information communication system 1A constructed by a country A and a domestic information communication system 1B constructed by a country B are connected via an international connection gateway 50 provided in an international network 2.

The domestic information communication system 1A of the country A includes, for example, information processing apparatuses 31A to 3nA operated by a plurality of companies P to S, respectively, and industry platforms 21A to 2mA operated by industries, respectively. The information processing apparatuses 31A to 3nA of the companies P to S are all constructed by server computers or personal computers.

The information processing apparatuses 31A to 3nA operated by the companies P to S can perform information communication with supplier terminals 41A to 4wA used by a plurality of suppliers via a domestic network. In addition, the information processing apparatuses 31A to 3nA can perform information communication with the industry platforms 21A to 2mA operated by the industries to which the companies belong via a domestic network.

On the other hand, the domestic information communication system 1B of the country B is also configured as described below, similarly to the domestic information communication system 1A of the country A. Specifically, the domestic information communication system 1B includes information processing apparatuses 31B to 3nB operated by a plurality of companies P to U, respectively, and industry platforms 21B to 2mB operated by respective industries. Note that the information processing apparatuses 31B to 3nB may include an information processing apparatus operated by the same company as the company in the country A, and also the industry platforms 21B to 2mB may include an industry platform operated by the same industry as the industry existing in the country A.

The information processing apparatuses 31B to 3nB operated by the companies P to U are all constructed by server computers or personal computers. In addition, the information processing apparatuses 31B to 3nB can perform information communication with supplier terminals 41B to 4wB used by a plurality of suppliers via a domestic network. Besides, the information processors 31B to 3nB can perform information communication with the industry platforms 21B to 2mB operated by the industries to which the companies belong via the domestic network.

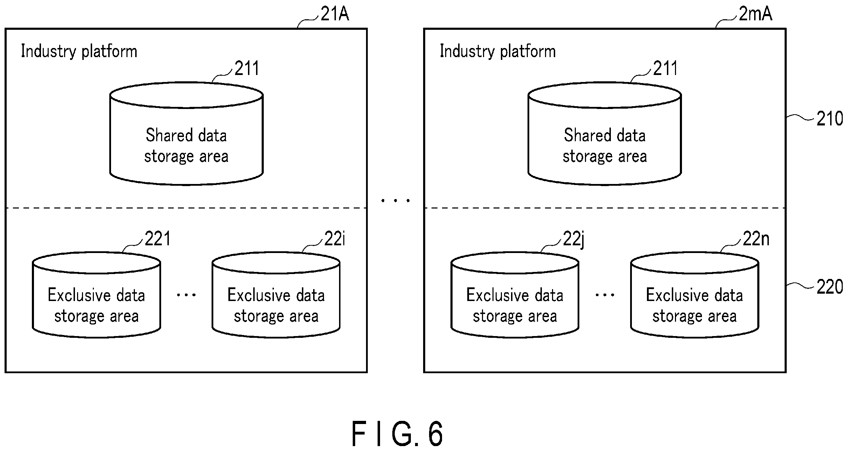

The industry platforms 21A to 2mA and 21B to 2mB of the country A and the country B include data spaces for managing data and software possessed by the companies in the industry. The data space includes, for example, as illustrated in FIG. 6, a shared data storage area 211 and exclusive data storage areas 221 to 22n.

The exclusive data storage areas 221 to 22n are used for storing exclusive data that each company should keep confidential. Note that in order to ensure the identity of the company that owns the exclusive data, the exclusive data is correlated with, for example, the number of a communication line of a domestic network, with which the company has a contract, as an authentication ID.

On the other hand, the shared data storage area 211 is used by the company that operates the shared data storage area 211, in order to store data, which may be provided to other enterprises, as shared data. In the shared data storage area 211, IDs for identifying storage areas and IDs for identifying companies that operate the shared data storage area 211 are set, and these IDs are registered in authentication control apparatus 10A or 10B of the corresponding country A or B. Note that the shared data storage area 211 may be provided individually by each company in the industry or may be installed jointly by a plurality of companies in the industry.

### (2) Apparatus

### (2-1) Authentication Control Apparatus 10A, 10B

Each of the domestic information communication systems 1A and 1B of the country A and the country B is provided with an authentication control apparatus 10A, 10B. The authentication control apparatus 10A, 10B is composed of, for example, a server computer. The authentication control apparatus 10A, 10B includes a federation service function. The federation service function integrally manages IDs and the like for mutually linking the domestic industry platforms 21A to 2mA and 21B to 2mB, and the information processing apparatuses 31A to 3nA and 31B to 3nB operated by the domestic companies.

In addition, the authentication control apparatus 10A, 10B includes a function as a search portal for shared data. When the information processing apparatus, 31A to 3nA, 31B to 3nB of each company has sent a search request for shared data of other companies, the search portal function performs a predetermined authentication procedure, searches for shared data stored in the shared data storage areas 211 of the industry platform, 21A to 2mA, 21B to 2mB, and notifies the search result to the information processing apparatus, 31A to 3nA, 31B to 3nB of the request source.

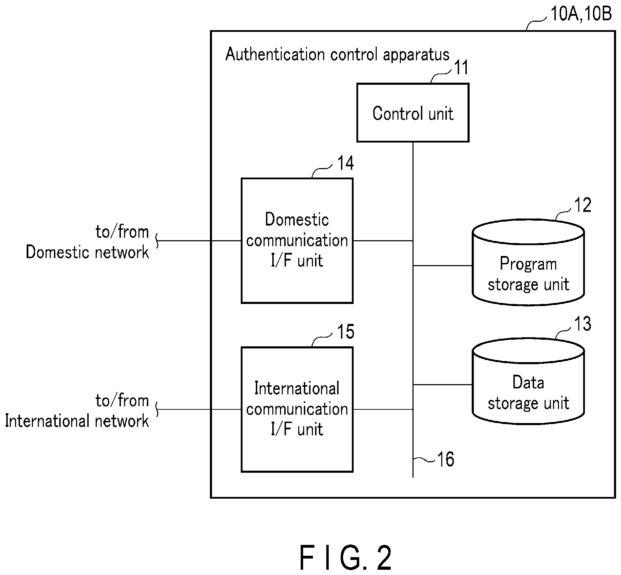

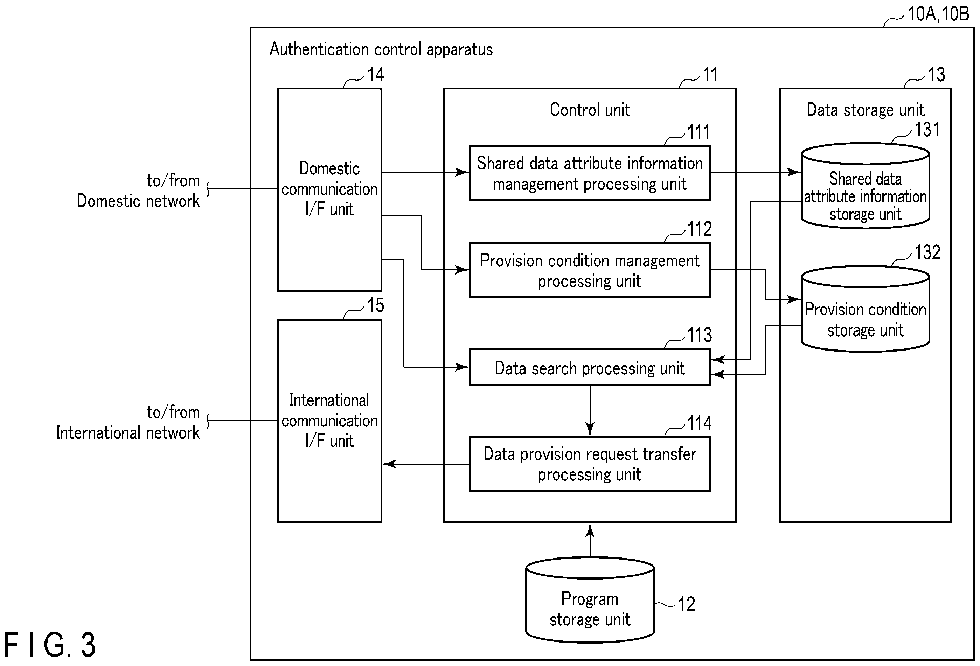

FIGS. 2 and 3 are block diagrams illustrating examples of the hardware configuration and software configuration of the authentication control apparatus 10A, 10B.

The authentication control apparatus 10A, 10B includes a control unit 11 using a hardware processor such as a central processing unit (CPU), and is configured such that a storage unit including a program storage unit 12 and a data storage unit 13, a domestic communication interface (hereinafter, the interface is abbreviated as I/F) unit 14, and an international communication I/F unit 15 are connected to the control unit 11 via a bus 16.

The domestic communication I/F unit 14 transmits and receives information to and from the industry platforms 21A to 2mA, 21B to 2mB, and the information processing apparatuses 31A to 3nA, 31B to 3nB of the companies in accordance with a communication protocol defined by a public network or a local network constituting the domestic network.

The international communication I/F unit 15 transmits and receives information to and from the international connection gateway 50 in accordance with a protocol defined by the international network 2.

The program storage unit 12 is constituted by combining, as storage media, a nonvolatile memory capable of writing and reading at any time, such as a solid state drive (SSD), and a nonvolatile memory such as a read-only memory (ROM), and stores an application program necessary for executing various control processes according to the embodiment, in addition to middleware such as an operating system (OS). Note that hereinafter, the OS and the application programs are collectively referred to as a program.

The data storage unit 13 is, for example, a combination of a nonvolatile memory capable of writing and reading at any time, such as an SSD, and a volatile memory such as a random access memory (RAM), as storage media, and includes a shared data attribute information storage unit 131 and a provision condition storage unit 132 as main storage units necessary for implementing the embodiment.

The shared data attribute information storage unit 131 is used to store attribute information of the shared data of each company stored in the shared data storage areas 211 of the industry platforms 21A to 2mA, 21B to 2mB.

The attribute information of the shared data includes, for example, attributes unique to the present invention, in addition to attributes relating to a product such as a data type, a target product name, and a product category. The unique attributes include the names of data providing companies (including corporations and individuals), the nationalities of the data providing companies, the storage locations of the data, data available periods, and security levels. Of these, the storage location of the data is represented by, for example, information indicating the location where the industry platform, 21A to 2mA, 21B to 2mB, in which the shared data is stored, or the information processing apparatus, 31A to 3nA, 31B to 3nB of the providing company, is installed (for example, location information of the installation location of a data center or the like).

The provision condition storage unit 132 is used to store information indicating a provision condition (also referred to as a disclosure condition) of the shared data. The provision conditions include, for example, a disclosure recipient name, a target country name (residence of the data user) to which disclosure is permitted, the nationality of a disclosure-permitted target person, a purpose of use, necessity of a contract for disclosure, permission of data duplication and storage, necessity of acquisition of certification of a disclosure destination, and a data reference time limit.

The control unit 11 includes a shared data attribute information management processing unit 111, a provision condition management processing unit 112, a data search processing unit 113, and a data provision request transfer processing unit 114 as processing functions necessary for implementing the embodiment. These processing units 111 to 114 are all implemented by causing the hardware processor of the control unit 11 to execute an application program stored in the program storage unit 12.

Note that some or all of the processing units 111 to 114 may be implemented by using hardware such as a large scale integration (LSI) or an application specific integrated circuit (ASIC).

The shared data attribute information management processing unit 111 executes a process of acquiring attribute information on the shared data of each company stored in the shared data storage areas 211 of the industry platforms 21A to 2mA, 21B to 2mB from the information processing apparatuses 31A to 3jA, 31B to 3jB of the companies serving as the providers, and storing the acquired attribute information of the shared data in the shared data attribute information storage unit 131 by correlating the attribute information with the identification IDs of the storage areas and the identification IDs of the companies serving as the providers. Note that the attribute information relating to the shared data may be collectively acquired from the industry platforms 21A to 2mA, 21B to 2mB.

The provision condition management processing unit 112 performs a process of acquiring information indicating the above-described shared data provision condition from the information processing apparatuses, 31A to 3nA, 31B to 3nB of the companies serving as the provision sources, and storing the acquired information indicating the shared data provision condition in the provision condition storage unit 132 by correlating the acquired information with the identification IDs of the companies serving as the provision sources. Note that the information indicating the shared data provision condition may also be collectively acquired from the industry platforms 21A to 2mA, 21B to 2mB.

If a search request for shared data is received from an information user, the data search processing unit 113 performs user authentication on the information user. In addition, the data search processing unit 113 determines whether or not to permit the search for the shared data specified by the search request, and, if the search is possible, executes a process of searching the shared data storage area 211 in which the corresponding shared data is stored, and presenting the search result to the information user of the request source. Note that an example of the search process for the shared data will be described in an operation example.

If a provision request for shared data selected by the information user from the search result is transmitted from the information processing apparatus of the company or the personal terminal, which serves as the information user, the data provision request transfer processing unit 114 performs a process of transferring the provision request to the international connection gateway 50.

### (2-2) International Connection Gateway 50

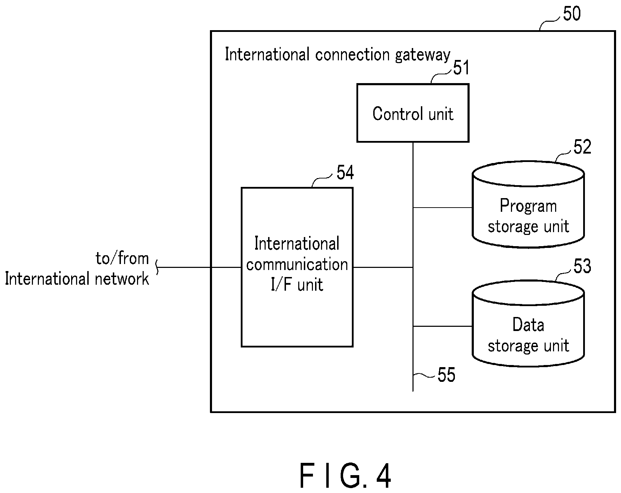

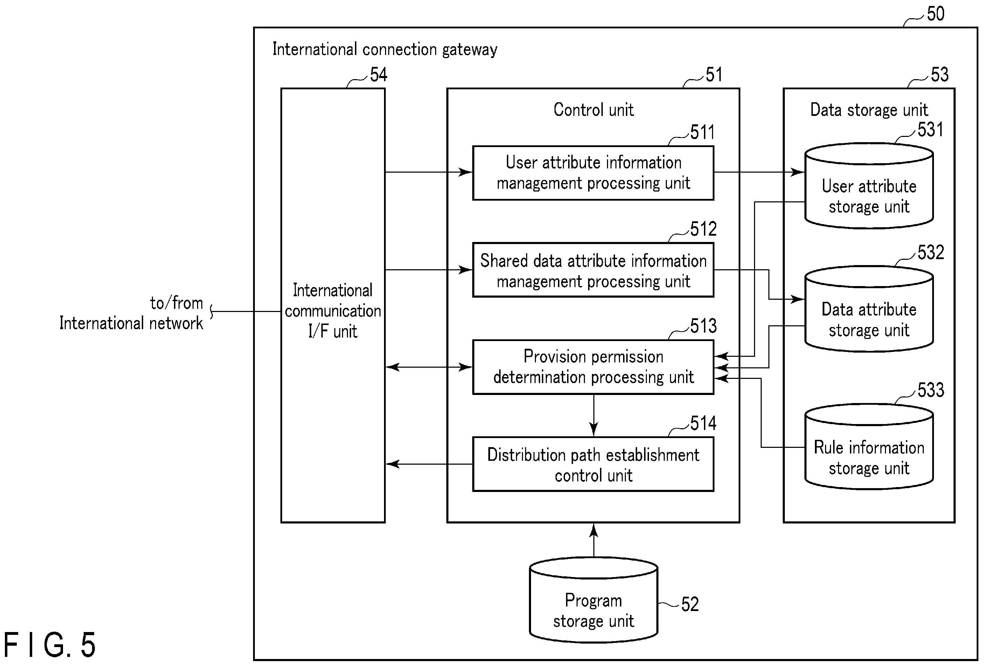

FIGS. 4 and 5 are block diagrams illustrating examples of a hardware configuration and a software configuration of the international connection gateway 50, respectively.

The international connection gateway 50 includes a control unit 51 using a hardware processor such as a central processing unit (CPU), and is configured such that a storage unit including a program storage unit 52 and a data storage unit 53, and an international communication I/F unit 54 are connected to the control unit 51 via a bus 55.

The international communication I/F unit 54 transfers information such as data or software to and from the domestic networks in the country A and country B in accordance with the communication protocol defined by the international network 2.

The program storage unit 52 is constituted, for example, by combining, as storage media, a nonvolatile memory capable of writing and reading at any time, such as an SSD, and a nonvolatile memory such as a ROM, and stores an application program necessary for executing various control processes according to the embodiment, in addition to middleware such as an OS. Note that hereinafter, the OS and the application programs are collectively referred to as a program.

The data storage unit 53 is, for example, a combination of a nonvolatile memory such as an SSD, which is capable of writing and reading at any time, and a volatile memory such as a RAM, as storage media, and includes a user attribute storage unit 531, a data attribute storage unit 532, and a rule information storage unit 533 as main storage units necessary for implementing the embodiment.

The user attribute storage unit 531 is used to store attribute information relating to users that are information providers or information users. The user attribute information is information in which the nationality of a user such as a corporation, an organization or an individual is correlated with a personal ID such as a passport number.

The data attribute storage unit 532 is used to store attribute information of the shared data stored in the shared data storage areas 211 of the industry platforms 21A to 2mA and 21B to 2mB of each country, and information indicating a provision condition.

The rule information storage unit 533 is used to store rule information such as laws and regulations and treaties of each country, and information indicating determination items for determining whether or not to permit information distribution. In the rule information, for example, the provisions of the laws and regulations and the treaties are replaced with a machine readable logic. The determination items include, for example, a target statute name, a date of enforcement, a target product, a target data name, an information security level, a disclosure target country (country number), and a disclosure target nationality (country number).

The control unit 51 includes a user attribute information management processing unit 511, a shared data attribute information management processing unit 512, a provision permission determination processing unit 513, and a distribution path establishment control unit 514 as processing functions necessary for implementing the embodiment. These processing units 511 to 514 are all implemented by causing the hardware processor of the control unit 51 to execute an application program stored in the program storage unit 52.

Note that some or all of the processing units 511 to 514 may be implemented by using hardware such as an LSI or an ASIC.

The user attribute information management processing unit 511 acquires, via the international communication I/F unit 54, for example, user attribute information including nationalities of corporations, organizations and individuals that are information providers and information users, and names of companies to which the information providers and information users belong, from the information processing apparatuses 31A to 3nA and 31B to 3nB operated by companies in the country A and country B. In addition, the user attribute information management processing unit 511 acquires the identification IDs of the corporations, organizations, or individuals serving as the information providers and the information users from the authentication infrastructure managed by the governments of countries. In addition, the acquired user information and the identifications ID are correlated and stored in the user attribute storage unit 531 as user attribute information.

The shared data attribute information management processing unit 512 performs a process of acquiring information indicating attribute information and provision conditions of shared data from the information processing apparatuses 31A to 3jA and 31B to 3jB of the companies in the countries A and B as provision sources, and storing the acquired information indicating attribute information and provision conditions of shared data in the data attribute storage unit 532 by correlating the acquired information with the identification IDs of the companies serving as provision sources. Note that the attribute information of shared data and the information indicating the provision conditions may be acquired from the authentication control apparatuses 10A and 10B.

If a provision request for shared data is transferred from the authentication control apparatus 10A, 10B in the country A, B, the provision permission determination processing unit 513 performs user authentication of the information user and determines whether or not to permit the provision of the shared data to the information user. In the permission determination, use is made of the attribute information of the shared data, the rule information, the information indicating the determination item, and the provision condition of the shared data, and an example of the determination process will be described in the operation example.

The distribution path establishment control unit 514 executes control to establish a data distribution path between the industry platform, in which the target data is stored, and the information user, in a case where the provision permission determination processing unit 513 permits the provision of the target data.

### (Operation Example)

Next, an operation example of the inter-country information distribution system with the above-described configuration is described.

### (1) Setting of Shared Data Storage Area 211 and Storage of Shared Data

In the country A and the country B, each company sets the shared data storage area 211 in the storage space of the industry platform, 21A to 2mA, 21B to 2mB, separately from the exclusive data storage areas 221 to 22n. In addition, each company stores shared data that can be provided (disclosed) to other companies in the shared data storage area 211.

The shared data storage process is performed by, for example, creating copy data of the exclusive data that can be provided to another company among the exclusive data stored in the exclusive data storage areas 221 to 22i of the industry platforms 21A to 2mA, 21B to 2mB, under the control of the information processing apparatuses 31A to 3nA, 31B to 3nB of the companies, and by storing the created copy data in the shared data storage area 211 as shared data.

At this time, in metadata into which the attribute information of the shared data is inserted, for example, the company ID or name of the company that is the owner, the nationality, the country name indicating the storage location of the data, the data available period, and the security level are set in addition to the attributes relating to products, such as the data type, the target product name and the product category. The country name indicating the storage location of the shared data is set based on the location information of the place where the data center in which the industry platforms 21A to 2mA, 21B to 2mB, are provided, or the location where the information processing apparatuses 31A to 3nA, 31B to 3nB of the companies are installed.

In addition, fingerprint data is created and added to the main body of each shared data. By adding the fingerprint data, even if the attribute information (metadata) of the shared data cannot be used due to a transmission error or falsification by a third party, the ID of the original data can be searched by using as a key the fingerprint data added to the body of the shared data, and the attribute information (master information of the metadata before falsification) of the data can be restored. Note that the fingerprint data may be assigned to the exclusive data in advance.

### (2) Operation of Authentication Control Apparatus 10A, 10B

The authentication control apparatus 10A, 10B in each country A, B executes an authentication process and a data search process according to the present invention as follows.

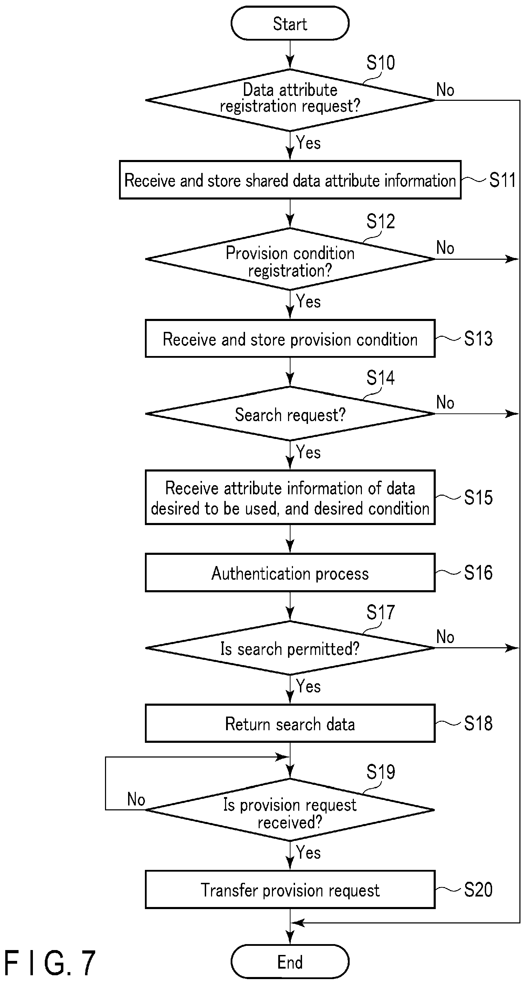

FIG. 7 is a flowchart illustrating an example of a processing procedure and processing contents relating to data distribution control executed by the control unit 11 of the authentication control apparatus 10A, 10B of the country A, B.

### (2-1) Registration of Attribute Information of Shared Data

The control unit 11 of the authentication control apparatus 10A, 10B in each country A, B monitors a data attribute registration request in step S10.

In this state, for example, it is assumed that a registration request for the attribute information of the shared data stored in the shared data storage area 211 of the industry platform, 20A to 2mA, 21B to 2mB, is received from the information processing apparatus, 31A to 3nA, 31B to 3nB, or from the industry platform, 21A to 2mA, 21B to 2mB.

Then, in step S11, the control unit 11 of the authentication control apparatus 10A, 10B receives, via the domestic communication I/F unit 14, the attribute information of the shared data transmitted from the information processing apparatus, 31A to 3nA, 31B to 3nB, of the company or from the industry platform, 21A to 2mA, 21B to 2mB, under the control of the shared data attribute information management processing unit 111. Then, the received attribute data is stored in the shared data attribute information storage unit 131.

### (2-2) Registration of Provision Condition of Shared Data

Subsequently, in step S12, the control unit 11 of the authentication control apparatus 10A, 10B monitors a provision condition registration request.

In this state, it is assumed that a registration request for the above shared data provision condition is received from the information processing apparatus, 31A to 3nA, 31B to 3nB, of the company, or from the industry platform, 21A to 2mA, 21B to 2mB. Then, in step S13, the control unit 11 of the authentication control apparatus 10A, 10B receives the information indicating the shared data provision condition transmitted from the information processing apparatus, 31A to 3nA, and 31B to 3nB, of the company, or from the industry platform, 21A to 2mA, 21B to 2mB, via the domestic communication I/F unit 14 under the control of the provision condition management processing unit 112. Further, the received information indicating the provision condition is stored in the provision condition storage unit 132.

### (2-3) Search for Shared Data

In step S14, the control unit 11 of the authentication control apparatus 10A, 10B monitors a data search request transmitted from the information user.

In this state, it is assumed that the data search request for shared data of the company Q in the country A is transmitted from an information user, for example, the information processing apparatus SjB of the company T in the country B illustrated in FIG. 1, or a terminal of an individual belonging to the company T.

In this case, at first, in step S15, the control unit 11 of the authentication control apparatus 10B receives the identification information of the shared file of the company Q and the user information of the information user, together with or subsequently to the data search request, under the control of the data search processing unit 113. The user information of the information user includes, for example, the nationality, identification ID and name of the information user, the name of the company to which the information user belongs and the nationality of the company, and the location information or nationality indicating the current residence of the information user. As the location information or nationality of the residence, for example, use is made of location information of a data center in which an information processing apparatus used by the information user is installed, or location information of a personal terminal. These pieces of location information can be acquired by, for example, a global positioning system (GPS) sensor.

Next, in step S16, the data search processing unit 113 performs an authentication process on the information user of the request source. This authentication process is performed by collating the user information transmitted from the information user with, for example, the user information of the information user registered in advance or the user information acquired from an authentication infrastructure (not illustrated).

Subsequently, the data search processing unit 113 reads out the attribute information and the provision condition of the corresponding shared data from the shared data attribute information storage unit 131 and the provision condition storage unit 132, by using the received identification information of the shared data as a key. Then, the read-out attribute information of shared data and provision condition are collated with the user information of the information user, thus determining whether or not to permit the search for the shared data.

If the result of the determination is that the shared data can be searched, the data search processing unit 113 advances from step S17 to step S18, searches the shared data storage area 211 of the industry platform 21B, and returns information representing the search result to the information user of the request source. The information indicating the search result is composed of, for example, a list of a plurality of shared data correlated with the identification information of the shared data.

Upon receiving the information indicating the search result, the information user selects shared data, the provision (disclosure) of which the information user desires, from among the plurality of shared data described in the search result. Then, a provision request for the selected shared data is generated and transmitted.

On the other hand, if the control unit 11 of the authentication control apparatus 10B receives the provision request in step S19, the control unit 11 transmits the provision request to the international connection gateway 50 in step S20 under the control of the data provision request transfer processing unit 114.

Note that in the above-described data search process, after performing the user authentication, the authentication control apparatus 10B refers to the attribute information of the shared data and the information indicating the provision condition, determines whether or not to permit the search for the shared data, the provision of which the information user desires, and executes the search process for the shared data if the search is possible. However, the shared data search process may be executed directly after the user authentication, by omitting the process of determining whether or not to permit the search for the shared data.

This makes it possible to reduce the processing load of the authentication control apparatus 10A, 10B and to reduce the search delay. Note that even if the process of determining whether or not to permit the search for the shared data is omitted, no inconvenience occurs because the international connection gateway 50, which will be described later, determines whether or not to permit the data provision.

### (3) Operation of International Connection Gateway 50

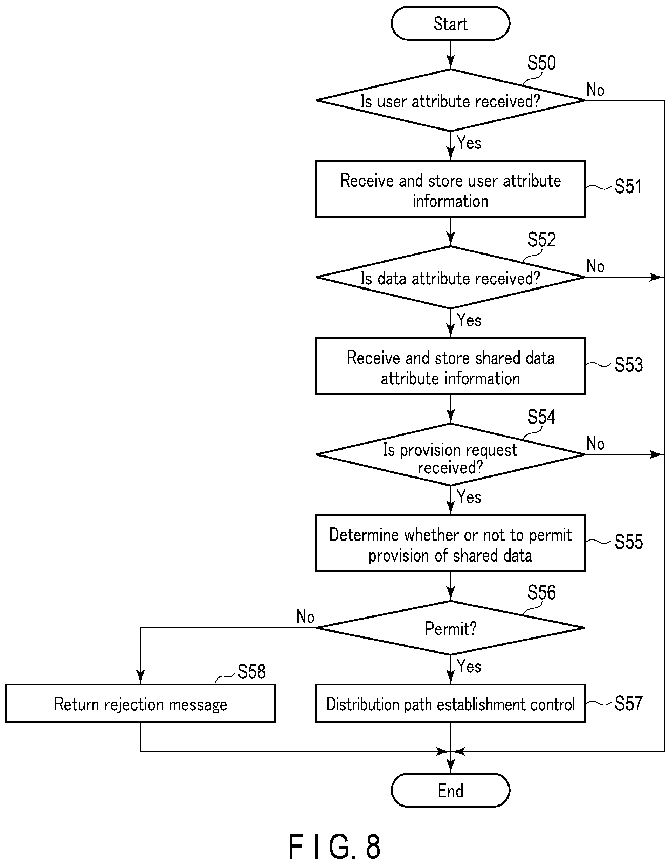

FIG. 8 is a flowchart illustrating an example of a processing procedure and processing contents relating to inter-country data distribution control executed by the control unit 51 of the international connection gateway 50.

### (3-1) Management of User Information

In step S50, the control unit 51 of the international connection gateway 50 monitors registration requests for the user attribute information of information providers and information users belonging to the country A and the country B.

In this state, for example, if a user registration request is transmitted from the information processing apparatus, 31A to 3nA, 31B to 3nB, that is operated by a company in the country A, B, the control unit 51 of the international connection gateway 50 first receives, in step S51, user information transmitted together with or subsequently to the user registration request via the international communication I/F unit 54 under the control of the user attribute information management processing unit 511. For example, the user attribute information management processing unit 511 receives, via the international communication I/F unit 54, user information including the nationalities of corporations, organizations or individuals, which serve as an information provider and an information user, and belonging company names, from the information processing apparatuses 31A to 3nA, 31B to 3nB operated by companies in the country A and country B.

In addition, the user attribute information management processing unit 511 acquires the identification IDs of the corporations, organizations, or individuals serving as the information provider and the information user from the authentication infrastructure managed by the government of each country. Then, the acquired user information and the identification IDs are correlated and stored in the user attribute storage unit 531 as user attribute information.

### (3-2) Management of Data Attribute Information

Subsequently, in step S52, the control unit 51 of the international connection gateway 50 monitors an attribute registration request for shared data possessed by the information provider in the country A, B.

In this state, for example, if a shared data registration request is transmitted from the information processing apparatus, 31A to 3nA, 31B to 3nB, that is operated by a company in the country A, B, the control unit 51 of the international connection gateway 50 receives, in step S53, information indicating the shared data attribute information and provision condition transmitted together with or subsequent to the data registration request via the international communication I/F unit 54, under the control of the shared data attribute information management processing unit 512. Then, the received attribute information of the shared data and information indicating the provision condition are stored in the data attribute storage unit 532 by correlating the received information with the identification ID of the storage area in which the shared data is stored and the identification ID of the provider company.

The attribute information of the shared data includes, for example, the name of a data providing company (including a corporation and an individual), the nationality of the data providing company, the country name indicating the storage location of the data, the data available period, and the security level as unique attributes according to the present invention, in addition to attributes relating to the product, such as the data type, the target product name, and the product category.

In addition, the provision conditions include, for example, a disclosure recipient name, a target country name (residence of the data user) to which the data can be disclosed, a nationality of a target person to whom the data can be disclosed, a purpose of use, necessity of a contract for disclosure, permission of data duplication and storage, necessity of acquisition of certification of a disclosure destination, and a data reference time limit.

### (3-3) Determination of Permission or Rejection of Provision of Shared Data

In step S54, the control unit 51 of the international connection gateway 50 monitors the reception of a provision request transmitted from an information user in country A or country B.

In this state, for example, it is assumed that a provision request for shared data of the company Q in the country A is transferred from the authentication control apparatus 10B in the country B by the company T or a person belonging to the company T, which is the information user. The provision request includes user attribute information of the information user, attribute information of the desired shared data, and information representing the provision condition.

In this case, the control unit 51 of the international connection gateway 50 determines, in step S55, whether or not to permit the provision of the shared data, under the control of the provision permission determination processing unit 513, as described below.

Specifically, the provision permission determination processing unit 513 first performs user authentication by collating the user attribute information of the information user included in the received provision request with the user attribute information stored in the user attribute storage unit 531.

If the validity of the information user is confirmed by the user authentication, the provision permission determination processing unit 513 then recognizes the data storage location of the shared data, the product category, the data type, and the security level, based on the attribute information of the shared data desired to be provided, which is included in the provision request.

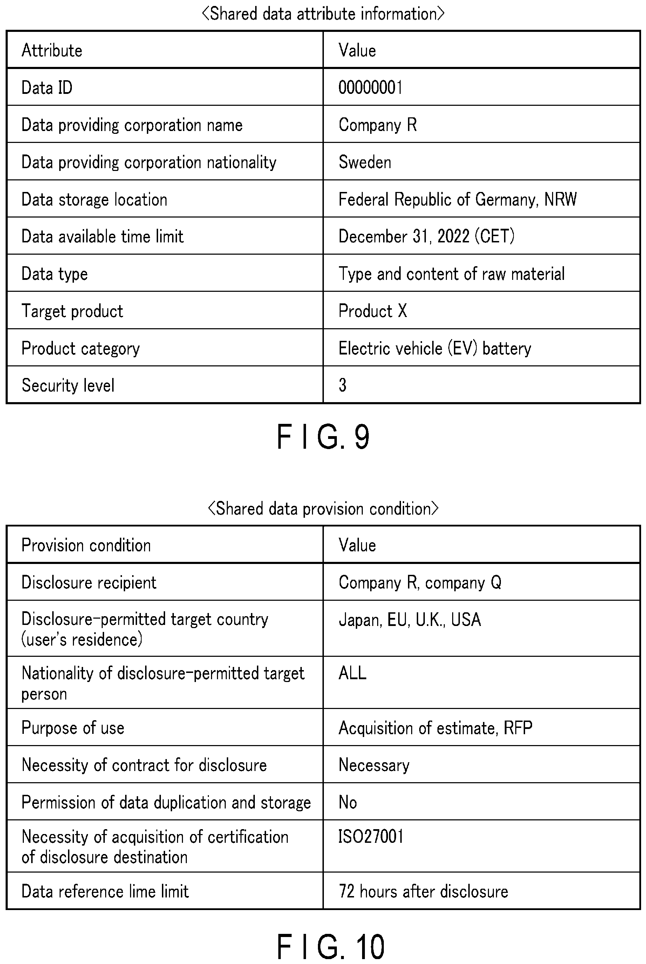

For example, if the shared data attribute information is as illustrated in FIG. 9, the provision permission determination processing unit 513 recognizes that the data storage location = "Federal Republic of Germany, Nordrhein-Westfalen (NRW)", the product category = "electric vehicle (EV) battery", the data type = "type and content of raw material", and the security level = "3". Note that the security level is a confidentiality level for data set by a country for the data type, and is defined, for example, in five levels from "5" to "1" in descending order of the confidentiality level.

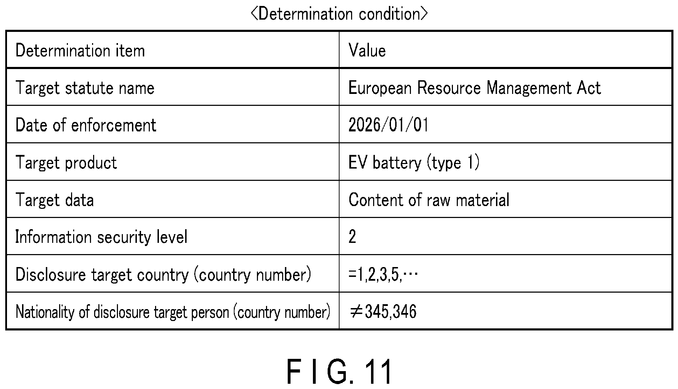

Subsequently, the provision permission determination processing unit 513 searches the rule information (the data of the provisions of the statute replaced with the machine-readable information) stored in the rule information storage unit 533 by using the recognition result as a key, and reads the determination condition relating to the overseas provision of data defined in the rule information. FIG. 11 illustrates an example of the determination condition in a case where the target law is "European Resource Management Act".

Then, the provision permission determination processing unit 513 compares the security level defined in the attribute of the shared data with the permissible security level described in the determination condition, and determines whether or not to permit the provision of the shared data, based on the comparison result. For example, since the security level "3" defined in the attribute information of the shared data is data having a higher security level than the permissible security level "2" defined in the determination condition of FIG. 11, the provision permission determination processing unit 513 determines that the provision of the shared data is "not permitted".

On the other hand, if the security level is the permissible security level "4" or "5", the security level "3" defined in the attribute information of the shared data is lower than the permissible security level, and thus the provision permission determination processing unit 513 determines that the shared data can be provided, and the process advances to the determination process based on nationality.

In the determination process based on nationality, the provision permission determination processing unit 513 collates the nationality of the company to which the information user belongs and the nationality of the individual, which are included in the user information of the information user, with the "disclosure target country" and the "disclosure target nationality" defined in the above-described determination conditions. As a result of the collation, if the nationality of the company to which the information user belongs and the nationality of the individual satisfy the conditions of "disclosure target country" and "disclosure target nationality" defined in the determination conditions, it is determined that the shared data can be provided, and if the conditions are not satisfied, it is determined that the shared data cannot be provided.

Finally, the provision permission determination processing unit 513 refers to the provision condition of the shared data acquired together with the provision request, and determines whether or not the use condition requested by the information user satisfies the provision condition. For example, if the shared data provision conditions are as illustrated in FIG. 10, it is determined whether the information user's use conditions satisfy the conditions defined in the provision conditions, such as "user's residence", "purpose of use", "necessity of contract for disclosure", and "permission of data duplication and storage". If the result of this determination is that the conditions are satisfied, the provision permission determination processing unit 513 permits the provision of the shared data to the information user, and if the conditions are not satisfied, does not permit the provision.

If the data provision is finally permitted by the series of transmission permission determination processes described above, the control unit 51 of the international connection gateway 50 advances from step S56 to step S57. Then, under the control of the distribution path establishment control unit 514, a data distribution path is established between the information processing apparatus 3jB of the company T in the country B or the personal terminal belonging to the company T, which is the source of the request for provision, and the industry platform 21A in the country A, which stores the shared data of the company Q.

As a result, the shared data of the company Q stored in the shared data storage area 211 of the industry platform 21A in the country A is transferred via the international network to the information processing apparatus 3jB of the company T in the country B or the personal terminal belonging to the company T, which is the source of the provision request.

On the other hand, it is assumed that the provision (disclosure) of the shared data of the company Q in the country A to the information user belonging to the company T in the country B is not permitted by the series of provision permission determination processes. In this case, the provision permission determination processing unit 513 advances from step S56 to step S58, generates a message indicating rejection of provision in step S58, and returns the generated rejection message from the international communication I/F unit 54 to the information processing apparatus 3jB or personal terminal of the information user that is the source of the provision request.

### (4) Concrete Examples of Data Provision Permission Determination

Next, a description is given of an example of determination of permission or rejection of a shared data provision request by the system according to the embodiment.

For example, it is now assumed that user information including a personal identification ID = 12345678, nationality "Japan", nationality "France" of a company to which the user belongs, and current residence "China", and shared data attribute information designating "battery passport number = ABCD-1234567890" as a search target are transmitted from the terminal of an information user "AAAA". Note that the residence of the information user is obtained by a location information detection function included in a terminal (for example, a smartphone) used by the information provider.

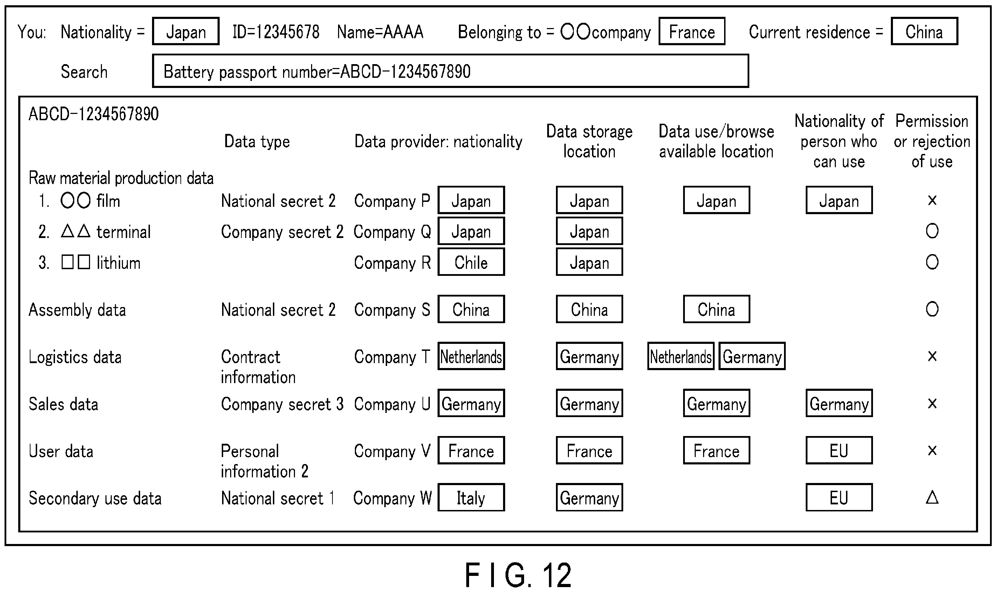

On the other hand, it is assumed that a shared data group corresponding to the search target "battery passport number = ABCD-1234567890" is searched by the authentication control apparatus 10A or 10B. FIG. 12 illustrates an example of the searched shared data group and the provision (disclosure) conditions set for each shared data.

The information user freely selects shared data, which is desired to be provided, from the searched shared data group, and transmits a provision request for the shared data. In response to this, the international connection gateway 50 performs permission determination, as described below, for the selected data, by adding rule information, such as laws and regulations, to the attribute information and the provision condition of the shared data set in advance.

### (4-1) Case where "1. OO film of raw material production data" is selected

In the selected "1. OO film of raw material production data", "nationality of data provider", "data storage location", "data use/browse available location", and "nationality of person who can use" are all set to "Japan" as the attribute information and the provision conditions of the shared data.

On the other hand, the nationality of the information user is "Japan", which corresponds to "Japan" that is the nationality of the person who can use the information designated in the provision condition. However, the current residence of the information user is "China", and does not correspond to the data use/browse available location "Japan". Therefore, the provision of data relating to the "1. OO film of raw material manufacturing data" is rejected.

### (4-2) Case where "2. ΔΔ terminal of raw material production data" is selected.

In the selected "2. ΔΔ terminal of raw material production data", "nationality of data provider" and "data storage location" are designated as "Japan" as the attribute information and the provision conditions, but "data use/browse available location" and "nationality of person who can use" are not particularly designated. Therefore, even if the current residence of the information user is "China", the provision of data relating to the "2. ΔΔ terminal of raw material production data" is permitted.

### (4-3) Case where "3. □□ lithium of raw material production data" is selected

In the selected "3. □□ lithium of raw material production data", "nationality of data provider" and "data storage location" are designated as "Chile" and "Japan", respectively, as the attribute information and the provision condition. However, as in the case of (4-2), "data use/browse available location" and "nationality of person who can use" are not specified in the disclosure conditions. Therefore, even if the current residence of the information user is "China", the provision of data relating to the "3. □□ lithium of raw material manufacturing data" is permitted.

### (4-4) Case where "Assembly Data" is Selected

In the selected "assembly data", "nationality of data provider", "data storage location", and "data use /brose available location" are all designated as "China" as the attribute information and the provision conditions, and "nationality of person who can use" is not particularly designated. Therefore, the provision of the data relating to the "assembly data" is permitted for the information user whose nationality is "Japan", since the "current residence of the information provider" coincides with the "data use/browse available location".

### (4-5) Case where "Logistics Data" is Selected

In the selected "logistics data", the "data use/browse available location" is designated as "Netherlands" or "Germany", and does not correspond to "China" that is the current residence of the information user. Therefore, the provision of data relating to the "logistics data" is rejected.

### (4-6) Case where "Sales Data" is Selected

In the selected "sales data", "data use/browse available location" is designated as "Germany", and "nationality of person who can use" is also designated as "Germany". Therefore, the information user whose current residence is "China" and whose nationality is "Japan" does not meet the above conditions, and therefore, the provision of data relating to the above "sales data" is also rejected.

### (4-7) Case where "User Data" is Selected

In the selected "user data", "nationality of data provider", "data storage location", and "data use/browse available location" are all designated as "France" as the attribute information and the provision conditions. However, since the current residence of the information user is "China" and the nationality of the person who can use the information user is "European Union (EU)", which is different from the nationality "Japan" of the information user, the provision of the "user data" is also rejected.

### (4-8) Case where "Secondary Use Data" is Selected

In the selected "secondary use data", "nationality of person who can use" is designated as "EU" as the attribute information and the provision condition, and does not correspond to "Japan" which is the nationality of the information user. However, the "nationality of person who can use" corresponds to the nationality "France" of the company to which the information user belongs. Therefore, the provision of a part of the "secondary use data" is permitted with limited use.

For example, data items in the shared data that are prohibited from being taken out of the country, in this example, personal information of a user who uses the battery secondarily and position information of the location of use, are masked, and the other data items are permitted to be provided. In addition, if the use of the application for processing the shared data is limited, the provision of the application is not permitted.

### (4-9) Other Determination Examples

In the examples illustrated above, the case was described by way of example, in which the permission or rejection of the provision of data is determined by giving priority to the correspondence between the "data use/browse available location" and the "current residence" of the information user. However, the embodiment is not limited to the above examples, and such definitions may be possible that the correspondence between "nationality of person who can use" and "nationality" of the information user is prioritized, and the correspondence between "nationality of data provider" and "nationality" of the information user or "nationality of company to which user belongs" is prioritized.

In short, in one embodiment, permission or rejection of provision of shared data is determined by a combination of "nationality" of the information user, "nationality of company to which information user belongs" and "current residence", and "nationality of data provider", "data storage location", "data use/browse available location" and "nationality of person who can use" designated by attribute information or provision conditions of shared data.

Although not illustrated in FIG. 12, it is also possible to perform control such that, by designating "provision available period" as attribute information of shared data, information of the data is not displayed at all in the shared data group of the search result, in a case where a search is performed at a date/time that does not correspond to the "provision available period".

### (5) Example of Rule Information Determination Process

The rule information is stored in advance in the rule information storage unit 533 in a state in which the provisions of the laws and ordinances are replaced with a machine-readable logic, for example, as described above.

The international connection gateway 50, under the control of the provision permission determination processing unit 513, first acquires the national security level information (exemplified in FIG. 12) and the number of the law to be referred to, from the attribute information (metadata) of the shared data, the provision of which is requested by the information user. The provision permission determination processing unit 513 then reads out the corresponding legal article information from the rule information storage unit 533, based on the above-mentioned national security level information and the number of the law to be referred to, and acquires the "nationality condition" and the "national security level condition" from data access restriction items described in the read-out legal article information.

The provision permission determination processing unit 513 then acquires nationality information from the user attribute information of the information user, and collates the acquired nationality information with the nationality condition. In addition, as a result of the collation, if the nationality information of the information user does not coincide with the nationality condition described in the legal article information, it is determined that the provision of the shared data is not permitted.

In addition, the provision permission determination processing unit 513 determines that the provision of the shared data is not permitted, also in a case where the security level described in the attribute information of the shared data is collated with the national security level condition described in the legal article information and the security level does not satisfy the national security level condition.

On the other hand, as a result of the above collation, if the nationality information of the information user coincides with the nationality condition described in the legal article information, and the security level of the shared data satisfies the national security level condition, the provision of the shared data is permitted.

### (Advantageous Effects)

As described above, in the embodiment, when the shared data of the information provider is provided to the information user across the countries, if the information user transmits a search request for the shared data of another company, the authentication control apparatus 10A, 10B of each country first performs user authentication of the information user, and then determines whether or not to permit the search for the shared data, based on the attribute information and the provision conditions of the shared data registered in advance, and, if the search is possible, transmits the search result relating to the shared data to the information user.

Next, if the international connection gateway 50 receives a request for providing the shared data selected by the information user, based on the search result, the international connection gateway 50 collates the user information of the information user included in the provision request with the attribute information of the shared data registered in advance, the provision information, and the rule information such as laws and ordinances, and determines whether or not to permit the provision of the shared data, based on the collation result. In addition, if the provision is permitted, the shared data is transferred from the industry platform in which the shared data is stored to the information user.

Therefore, according to the embodiment, it is possible to provide shared data from an information provider to an information user across countries while complying with rules such as laws and ordinances specified by each country.

In addition, the authentication control apparatus 10A, 10B in each country performs the user authentication of the information user and the determination of the permission or rejection of the data search based on the attribute and the provision condition of the shared data, and then executes the search process relating to the shared data, and then the international connection gateway 50 executes the determination of the permission or rejection of the provision of the shared data between the countries. Specifically, the authentication control apparatus 10A, 10B in each country and the international connection gateway 50 perform, in a sharing manner, the search for the shared data and the determination of whether or not to permit the provision of shared data between the countries. Therefore, the processing load is distributed, and efficient processing can be performed.

Furthermore, the shared data of the respective companies are collectively stored in the shared data storage area 211 provided in the industry platforms 21A to 2mA, 21B to 2mB, and are transferred from the shared data storage area 211 to the information users. Thus, it is possible to efficiently perform the processing for searching and transferring the shared data.

Moreover, the exclusive data storage areas 221 to 22n of the respective companies are provided in the industry platforms 21A to 2mA, 21B to 2mB, and when the shared data is stored, copy data of the exclusive data stored in the exclusive data storage areas 221 to 22n is generated, and the copy data is stored in the shared data storage area 211. Therefore, the exclusive data and the shared data of each company can be managed more safely.

### [Other Embodiments]

(1) In the above-described embodiment, the case where the shared data of the company is distributed across countries has been described as an example. However, the present invention is not limited to this, and can be applied to a case where software such as an application program owned by a company is distributed across countries.
(2) In the embodiment, the case was described in which the authentication control apparatuses 10A and 10B installed in the respective countries and the international connection gateway 50 disposed on the international network execute the information distribution control according to the present invention in cooperation with each other. However, the present invention is not limited to this, and the information distribution control according to the present invention may be executed collectively by any one of the authentication control apparatuses of the respective countries or the international connection gateway.
(3) In the above embodiment, the case was described by way of example, in which the authentication control apparatus 10A, 10B in each country includes both the authentication function and the data search function. However, the authentication function and the data search function may be executed by different apparatuses.
(4) In the embodiment, the case was described by way of example, in which the international connection gateway determines whether or not to permit the data provision based on the rules such as laws and regulations of the provision destination, and determines whether or not to permit the data provision based on the shared data provision condition. However, the embodiment is not limited to this, and the determination of whether or not to permit the data provision based on the rules and the determination of whether or not to permit the data provision based on the shared data provision conditions may be performed by different apparatuses.
(5) Besides, the type and functional configuration of the information distribution control apparatus, the processing procedure and processing contents of the information distribution control, the type and configuration of information to be distributed, and the like can be variously modified without departing from the spirit of the present invention.

The program according to the present embodiment, that is, the program executed by the processor of the information distribution control apparatus or the like, may be transferred in a state of being stored in an electronic apparatus such as the information distribution control apparatus or may be transferred in a state of not being stored in the electronic apparatus. In the latter case, the program may be transferred via a network or may be transferred in a state of being stored in a storage medium. The storage medium is a non-transitory tangible medium. The storage medium is a computer-readable medium. The storage medium may be any medium that can store a program and can be read by a computer, such as a CD-ROM or a memory card, and the form thereof is not limited.

Although the embodiments of the present invention have been described in detail, the above description is merely an example of the present invention in all respects. It is to be understood that various modifications and changes may be made without departing from the scope of the present invention. That is, in implementing the present invention, a specific configuration corresponding to the embodiment may be appropriately adopted.

In short, the present invention is not limited to the above-described embodiments as they are, and can be embodied by modifying the constituent elements without departing from the gist of the invention in the implementation stage. Further, various inventions can be formed by appropriately combining a plurality of constituent elements disclosed in the above embodiments. For example, some of the constituent elements may be deleted from all the constituent elements described in the embodiments. Further, the constituent elements of different embodiments may be combined as appropriate.

### REFERENCE SIGNS LIST

1A, 1B...Domestic information communication system
2...International network
10A, 10B...Authentication control apparatus
21A to 2mA, 21B to 2mB... Industry platform
31A to 3nA, 31B to 3nB... Information processing apparatus of company
41A to 4wA, 41B to 4wB...Supplier terminal
11, 51... Control unit
12, 52...Program storage unit
13, 53...Data storage unit
14...Domestic communication I/F unit
15, 54...International communication I/F unit
16, 55...Bus
111... Shared data attribute information management processing unit
112...Provision condition management processing unit
113...Data search processing unit
114...Data provision request transfer processing unit
131...Shared data attribute information storage unit
132... Provision condition storage unit
211...Shared data storage area
221 to 22n...Exclusive data storage area
511...User attribute information management processing unit
512...Shared data attribute information management processing unit
513...Provision permission determination processing unit
514...Distribution path establishment control unit
531...User attribute storage unit
532...Data attribute storage unit
533...Rule information storage unit

## Claims

1. An information distribution control apparatus used in a system in which an information provider and an information user distribute target information via an international network between a first information communication network constructed by a first country and a second information communication network constructed by a second country, the information distribution control apparatus comprising:
a first processing unit configured to manage first attribute information including an attribute of the information provider and an attribute of the target information, in which a unique condition including a rule of a belonging country is reflected, and condition information indicating a provision condition of the target information;
a second processing unit configured to acquire, from the information user, second attribute information including an attribute of the information user and an attribute of the target information desired to be used, in which the unique condition of the belonging country is reflected;
a third processing unit configured to collate the acquired second attribute information with the first attribute information, based on the provision condition, and to determine whether or not to permit distribution of the target information, based on a result of the collation; and
a fourth processing unit configured to output a determination result of whether or not to permit the distribution of the target information.

2. The information distribution control apparatus according to claim 1, wherein
the target information includes exclusive information stored in an exclusive information area accessible only by the information provider, and shared information stored in a shared information area accessible by the information provider and another party, and
the first processing unit manages an attribute of the shared information stored in the shared information area in the target information by including the attribute of the shared information in the first attribute information.

3. The information distribution control apparatus according to claim 1, wherein the third processing unit refers to article data representing the rule of the belonging country defined in the attribute of the target information, and collates a security level defined in the attribute of the target information with a security determination condition defined in the article data, and permits the distribution of the target information if the security level satisfies the security determination condition.

4. The information distribution control apparatus according to claim 1, wherein
the first processing unit manages the condition information including a nationality of the information user that is a provision destination of the target information as the provision condition, and
the third processing unit permits the distribution of the target information if the nationality of the information user included in the second attribute information coincides with the nationality of the information user serving as the provision destination included in the provision condition.

5. The information distribution control apparatus according to claim 1, wherein
the first processing unit manages the condition information including a country of a place where the target information is available as the provision condition, and
the third processing unit permits the distribution of the target information if a country of a location of presence of the information user included in the second attribute information coincides with the country of the place where the target information is available included in the condition information.

6. The information distribution control apparatus according to claim 1, wherein
the first processing unit further manages authentication information relating to the target information, and
the third processing unit restores the first attribute information of the target information, based on the authentication information, if the first attribute information of the target information is falsified, and determines whether or not to permit the distribution of the target information, based on the restored first attribute information.

7. The information distribution control apparatus according to claim 1, further comprising a fifth processing unit configured to perform control for establishing a distribution path of the target information from the information provider to the information user, if the distribution of the target information is permitted based on the determination result output from the fourth processing unit.

8. The information distribution control apparatus according to claim 1, wherein an authentication control apparatus included in the first information communication network and the second information communication network and an international network connection apparatus included in the international network execute the processes performed by the first processing unit to the fourth processing unit in cooperation with each other.

9. An information distribution control method executed by an information processing apparatus provided in a system in which an information provider and an information user distribute target information via an international network between a first information communication network constructed by a first country and a second information communication network constructed by a second country, the information distribution control method comprising:
a step of managing first attribute information including an attribute of the information provider and an attribute of the target information, in which a unique condition including a rule of a belonging country is reflected, and condition information indicating a provision condition of the target information;
a step of acquiring, from the information user, second attribute information including an attribute of the information user and an attribute of the target information desired to be used, in which the unique condition of the belonging country is reflected;
a step of collating the acquired second attribute information with the first attribute information, based on the provision condition, and determining whether or not to permit distribution of the target information, based on a result of the collation; and
a step of outputting a determination result of whether or not to permit the distribution of the target information.

10. A program for causing a processor included in the information distribution control apparatus to execute a process executed by at least one of the first to fourth processing units included in the information distribution control apparatus according to any one of claims 1 to 7.

11. A non-transitory computer-readable storage medium storing a program executed by a processor of an information distribution control apparatus used in a system in which an information provider and an information user distribute target information via an international network between a first information communication network constructed by a first country and a second information communication network constructed by a second country, the non-transitory computer-readable storage medium causing the processor to:
manage first attribute information including an attribute of the information provider and an attribute of the target information, in which a unique condition including a rule of a belonging country is reflected, and condition information indicating a provision condition of the target information;
acquire, from the information user, second attribute information including an attribute of the information user and an attribute of the target information desired to be used, in which the unique condition of the belonging country is reflected;
collate the acquired second attribute information with the first attribute information, based on the provision condition, and determine whether or not to permit distribution of the target information, based on a result of the collation; and
output a determination result of whether or not to permit the distribution of the target information.
